# EUROPEAN PATENT APPLICATION

(11) **EP 3 255 870 A1**
(43) Date of publication of application: **13.12.2017**
(21) Application number: 16746563.2
(22) Date of filing: 01.02.2016
(51) Int. Cl.: H04N 1/107, G06F 3/0354, G06T 1/00, H04N 1/387

(54) **OPTICAL TERMINAL DEVICE AND SCAN PROGRAM**

(30) Priority: 02.02.2015 JP 2015018891
(71) Applicant: OCR Systems Inc., Tokyo 108-0023 (JP)
(72) Inventor: SUETAKA, Hiroyuki, Tokyo 105-0013 (JP); MOTOYAMA, Hideki, Tokyo 105-0013 (JP); NAKAYAMA, Mitsuo, Tokyo 1080023 (JP)
(74) Representative: Awapatent AB
(86) International application number: PCT/JP2016/052895
(87) International publication number: WO 2016/125732

(57) **Abstract**

Provided are an optical terminal device and a scan program having a high operability not needing an excessive consciousness. An optical terminal device obtains the entire image of a scan object range, and includes an image capture unit 10 including an imaging element 11, taking an image of each region within the scan object range, and obtaining unit image data of each region, a positional information obtaining unit 20 obtaining image positional information corresponding to the unit image data, and an image synthesis unit 40 synthesizing a plurality of the unit image data, and creating the entire image of the scan object range. The positional information obtaining unit 20 includes a six-dimensional sensor 21 provided at a device main body, and detecting an acceleration and an angular speed, and an arithmetic processing unit 22 calculating the image positional information of the unit image data based on the acceleration and the angular speed.

## Description

### TECHNICAL FIELD

The present disclosure relates to an optical terminal device and a scan program executed thereon which scan an object, and which obtain image data within a prescribed range.

### BACKGROUND ART

Scanners are used to obtain a prescribed region on a document like printed paper as digital image data. As for such scanners, for example, a flatbed scanners which place a document on a platen glass like a copying machine, and scan the document by a reading device which emits light to the lower surface of the document, thereby reading an image, and a sheetfed scanners which obtain an image while automatically feeding the document and which discharge a document are provided. These scanners are capable of obtaining only the image of the entire paper surface, and are not suited for obtaining the image of the predetermined limited region on the paper.

Conversely, there are handheld scanners that obtain an image by a user who moves the scanner over a region where the user wants to obtain the image of the document. An example of such scanners is a mouse scanner. A mouse scanner is a device built with a scanner function in a mouse utilized together with a computer.

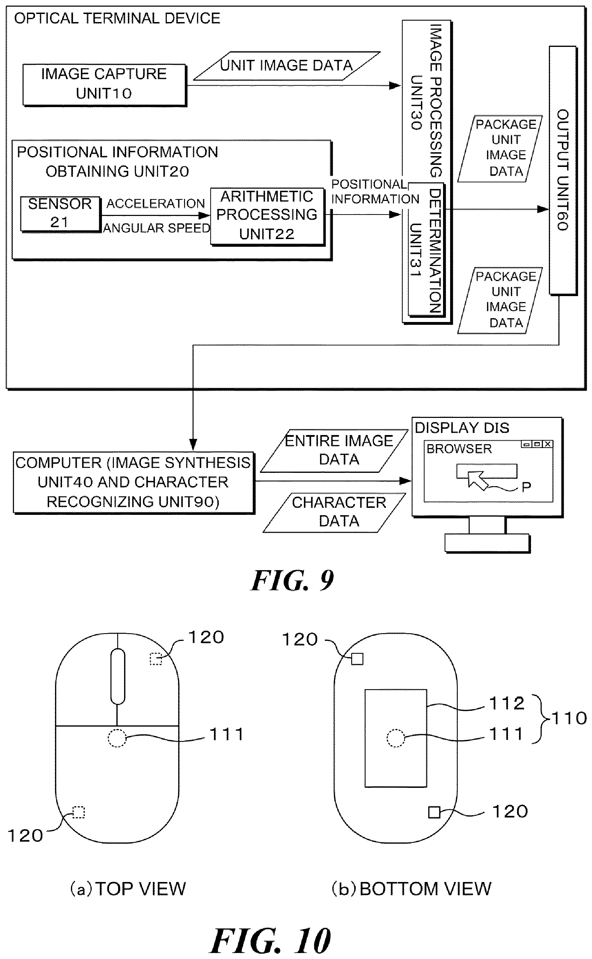

FIG. 10 is a structure diagram of a mouse scanner, in which (a) is a top view, and (b) is a bottom view. As illustrated in FIG. 10, the mouse scanner has a built-in camera 111, and obtains an image on a scan object like a paper document via a transparent window 112 provided on the bottom surface. Two positional sensors 120 which are optical sensors are provided on the bottom surface of the mouse scanner, and the positional coordinates of the mouse is obtained by these sensors. That is, while moving the mouse scanner on the scan object, images of multiple regions and positional coordinates of those regions are obtained. Based on these images and the positional coordinates thereof, an image of the entire region is created.

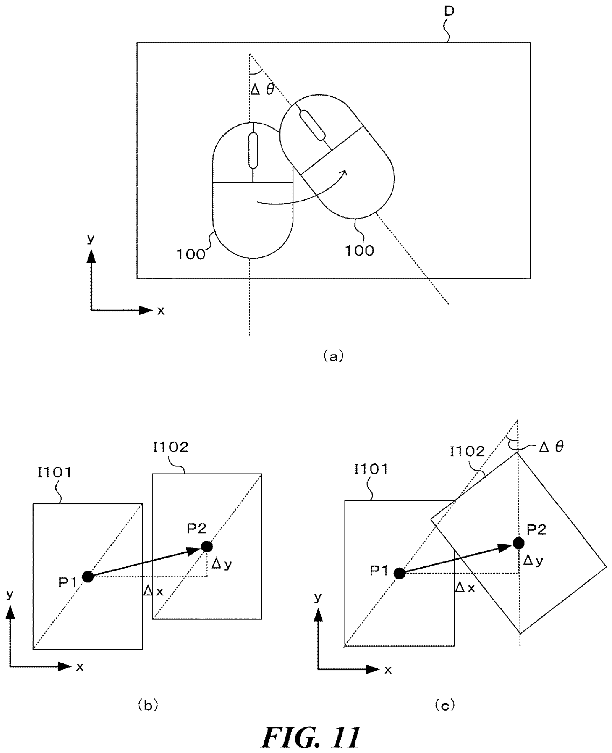

As illustrated in FIG. 11(a), when a mouse scanner 100 is moved by a user's operation to perform scanning, the angle of the taken image may be deviated due to an uneven sliding when the scanner is moved. In order to obtain an image of a scan object, the image of the entire scan object is created by, for example, pasting the taken unit images to synthesize them, but as illustrated in FIG. 11(b), if the unit images are pasted with the angle deviation of the taken image, the precision of the obtained entire image is deteriorated. Hence, in order to correct this deviation, conventional mouse scanners have, as illustrated in FIG. 10(b), the two positional sensors 120 are provided on the bottom surface so as to be, for example, diagonal.

That is, two positional coordinates are obtained by the two positional sensors 120, and a line segment connecting the positional coordinates between both positional sensors is obtained. As illustrated in FIG. 11(c), in the two unit images, an angle Δθ formed between the line segments is a deviation angle, while an angle correction of the unit image is performed based on this angle change.

### CITATION LIST

### PATENT LITERATURES

Patent Document 1: JP 2010-153984 A

### SUMMARY OF INVENTION

### TECHNICAL PROBLEM

When, however, scanning is performed by moving the camera in accordance with a user's operation like a mouse scanner, the two positional sensors need a certain pitch in order to ensure the precision of an angle change detection, and are provided so as to be apart from each other. Hence, when taking the image of an end portion of the object range subjected to scanning, one of the positional sensors goes out of the target region, and is unable to measure the position. Hence, a careful operation so as not to go out of the target region is required.

In addition, there is a technical problem such that the mouse scanner is unconsciously lifted up during scanning, and at least one positional sensor becomes apart from the scan object like a paper document, becomes unable to obtain the positional coordinates, and thus a precisely scanned image cannot be obtained. For that reason, a user needs to operate with excessive consciousness in some cases, resulting in inconveniency.

The technical problem with respect to such an operation is not limited to the mouse scanner, but is also a technical problem that is involved by all optical terminal devices that move the device by a user's operation to perform scanning by imaging means like a camera.

The present disclosure has been made in order to address the above technical problems, and an objective is to provide an optical terminal device and a scan program with a high operability that does not need an excessive consciousness.

### SOLUTION TO PROBLEM

An optical terminal device according to the present disclosure obtains an entire image of a scan object range, and the optical terminal device includes:
an image capture unit including an imaging element, taking an image of each region within the scan object range, and obtaining unit image data of the each region;
a positional information obtaining unit obtaining image positional information corresponding to the unit image data; and
an image synthesis unit synthesizing a plurality of the unit image data, and creating the entire image of the scan object range,
in which the positional information obtaining unit includes:
   a six-dimensional sensor provided at a device main body, and detecting an acceleration and an angular speed; and
   an arithmetic processing unit calculating the image positional information of the unit image data based on the acceleration and the angular speed.

The six-dimensional sensor may be provided at a back side of the image capture unit. The arithmetic processing unit may calculate posture information of the unit image data based on the angular speed.

The optical terminal device may further include a control unit controlling an imaging by the imaging element, in which:
the arithmetic processing unit may calculate a height displacement as a piece of the image positional information;
the controller may include:
   a determination unit determining whether or not the height displacement is within a prescribed height displacement range; and
   an imaging control unit instructing or terminating the imaging by the imaging element based on a determination result by the determination unit.

The arithmetic processing unit may calculate a height displacement as a piece of the image positional information;

the image processing unit may include a determination unit determining whether or not the height displacement is within a prescribed height displacement range; and

the determination unit may discard the unit image data determined as out of the prescribed height displacement range.

The optical terminal device may further include an image processing unit associating the image positional information with the unit image data to obtain package unit image data.

The optical terminal device may further include a display unit displaying an image, in which the display unit may display a unit image or the entire image during scanning.

An optical terminal device according to the present disclosure obtains an entire image of a scan object range, and the optical terminal device includes:
an image capture unit including an imaging element, taking an image of each region within the scan object range, and obtaining unit image data of the each region;
a positional information obtaining unit obtaining image positional information corresponding to the unit image data;
an output unit outputting the unit image data and the image positional information; and
a pointing unit,
in which:
   the positional information obtaining unit includes:
      a six-dimensional sensor provided at a device main body, and detecting an acceleration and an angular speed; and
      an arithmetic processing unit calculating the image positional information of the unit image data based on the acceleration and the angular speed; and
      the output unit is connected to an external computer or server, and outputs to a prescribed location specified by the pointing device.

A scan program according to another aspect of the present disclosure is executed on an optical terminal device including an image capture unit comprising an imaging element, taking an image of each region within a scan object range, and obtaining unit image data of the each region, a six-dimensional sensor provided at a device main body, and detecting an acceleration and an angular speed, and a computer, the scan program causing the computer to function as:
arithmetic processing unit calculating image positional information corresponding to the unit image data based on the acceleration and the angular speed; and
image synthesis unit synthesizing a plurality of the unit image data, and creating an entire image of the scan object range.

### ADVANTAGEOUS EFFECTS OF INVENTION

According to the present disclosure, an optical terminal device and a scan program having a high operability without necessity for an excessive consciousness are obtained.

### BRIEF DESCRIPTION OF DRAWINGS

FIG. 1 is a functional block diagram of an optical terminal device according to a first embodiment;
FIG. 2 is a structural diagram of the optical terminal device (mouse scanner) according to the first embodiment, in which (a) is a top view, and (b) is a side cross-sectional view;
FIG. 3 is a diagram for explaining a sensor applied to the optical terminal device according to the first embodiment;
FIG. 4 is a diagram for explaining pasting of an image;
FIG. 5 is a flowchart illustrating an action of the optical terminal device according to the first embodiment;
FIG. 6 is a functional block diagram of an optical terminal device according to a second embodiment;
FIG. 7 is a functional block diagram including an optical terminal device according to a third embodiment;
FIG. 8 is a functional block diagram including an optical terminal device according to a fourth embodiment;
FIG. 9 is a functional block diagram including an optical terminal device according to a fifth embodiment;
FIG. 10 is a structural diagram of a conventional mouse scanner, in which (a) is a top view, and (b) is a bottom view; and
FIG. 11 is a diagram for explaining a conventional angle correction technology.

### DESCRIPTION OF EMBODIMENTS

An optical terminal device and a scan program according to embodiments of the present disclosure will be described below with reference to the figures.

### [1. First Embodiment]

### [1-1. Structure]

An optical terminal device according to this embodiment is a device that obtains the entire image of the scan object range in a scan object. This device shoots a part of the target region by an imaging element like a camera to obtain unit image data, and makes this unit image data and image positional information thereof as one set. Also, based on the image positional information, the device performs image synthesis to paste the unit image data, and creates the entire image of the scan object.

A memory that stores a program and a microcomputer including a CPU are provided in the optical terminal device and the program is expanded in a RAM as appropriate, and the program is processed by the CPU to calculate the positional information, associate the position information with the unit image data, and create the entire image, and the like.

The structure of the optical terminal device will be described in more detail. Example optical terminal devices are terminal devices, such as a mouse scanner, a smartphone, and a tablet, having a scanner function. In this embodiment, a mouse scanner will be described below as an example.

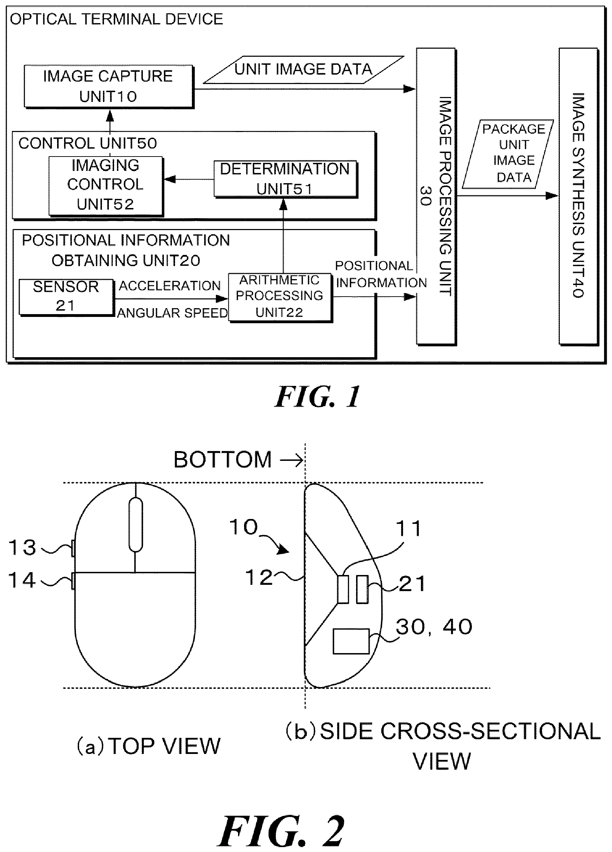

FIG. 1 is a functional block diagram of an optical terminal device according to this embodiment. FIG. 2(a) is a top view of the optical terminal device (mouse scanner) according to this embodiment, and FIG. 2(b) is a side cross-sectional view thereof.

As illustrated in FIGS. 1 and 2, the mouse scanner includes an image capture unit 10, a positional information obtaining unit 20, and an image processing unit 30. The image capture unit 10 includes an imaging element 11, shoots each region within the scan object range of the scan object, and obtains the unit image data of each region.

More specifically, the imaging element 11 is a camera, such as a CCD or a CMOS, and is provided in the internal space of the casing of the mouse scanner with the imaging surface being directed toward the bottom surface of the mouse scanner, and takes the image of the scan object like a paper surface via a transparent plate 12 provided at the bottom when an imaging start button 13 provided on the mouse scanner illustrated in FIG. 2 is depressed. To end the scanning, an imaging end button 14 provided in the mouse scanner is depressed.

It should be noted that a single imaging button may be employed. In this case, the number of depressing times for the button may be counted, the odd number may be taken as the start of imaging, and the even number may be taken as the end of imaging, or the button may be kept depressed at the start of scanning and during the scanning, and may be released at the end of scanning. In addition, a proximity sensor for detecting whether or not the mouse scanner is firmly contacted with the scan object may be provided, and optical systems, such as a light like an LED, a mirror, and a lens that lights up the imaging object may be provided.

The positional information obtaining unit 20 detects information on the height of the image capturing unit 10, and obtains image positional information corresponding to the unit image data. The image positional information is information on the unit image data, such as the coordinates and angle change of the unit image data when the unit image data is pasted as described later. The positional information obtaining unit 20 includes a sensor 21 that detects information on the position including the height of the image capture unit 10, and the posture thereof, and an arithmetic processing unit 22 that calculates the image positional information of the unit image data based on the detected information by the sensor 21.

As illustrated in FIG. 2, in this embodiment, the sensor 21 is built in the mouse scanner, and is provided behind the the image capture unit 10 (imaging element 11) with the relative positional relationship to the image capture unit 10 being fixed. The sensor may be attached to the exterior of the housing of the mouse scanner as long as the relative positional relationship to the imaging element 11 is fixed.

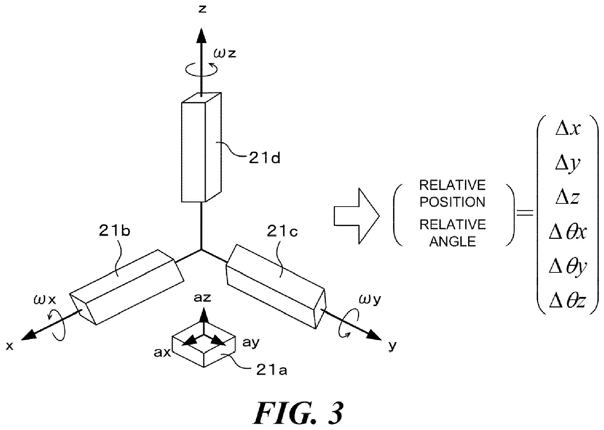

As illustrated in FIG. 3, the sensor 21 is a six-dimensional sensor (six-axis sensor), and includes an acceleration sensor 21a that detects the three-dimensional accelerations ax, ay, and az of the image capture unit 10, and a three-dimensional gyro sensor that detects the three-dimensional angular velocities ωx, ωy, and ωz of the image capture unit 10. The three-dimensional gyro sensor includes three gyro sensors 21b to 21d, and the gyro sensors 21b to 21d are disposed on the x, y, and z axes orthogonal to each other, and detect the angular speed around each axis. The six-dimensional sensor may be assembled by providing three acceleration sensors and three gyro sensors on each of the x axis, the y axis, and the z axis orthogonal to each other, or a six-axis sensor having three acceleration sensors and three gyro sensors packaged with each other may be applied.

As for the acceleration sensor 21a and the gyro sensors 21b to 21d, various conventionally known technologies like ones that utilize MEMS (Micro Electro Mechanical System) are applicable. In addition, example acceleration sensors 21a are a piezo resistance type, a capacitance type, and a piezoelectric element type sensors, while example gyro sensors 21b to 21d are a ring-laser gyroscope and an optical-fiber gyroscope. However, the present disclosure is not limited to these described sensors.

The arithmetic processing unit 22 mainly includes a CPU, and obtains the image positional information including the amount of change in position and posture based on the acceleration or the angular speed from the acceleration sensor 21a or the gyro sensors 21b to 21d, by arithmetic processing like integration. Hence, for example, the relative position, the relative angle, and the like, of the unit image data shot at the present time relative to the unit image data shot at the last time can be obtained. In addition to the relative position and the relative angle to the last time, the relative position and the relative angle to the several past times like the time before the last time may be obtained. The amount of change in angle and posture obtained by the arithmetic processing unit 22 can be applied for a correction when an image synthesis is performed in an image synthesis process to be described later. In this way, the arithmetic processing unit 22 calculates the relative displacement of the image capture unit 10, and takes the relative displacement as the displacement of the unit image. Alternatively, the displacement of the unit image may be calculated based on the prescribed relationship. The relative position in the three-dimensional space can be traced by the arithmetic processing unit 22.

The image processing unit 30 is connected to the image capture unit 10 and the positional information obtaining unit 20. To the image processing unit 30, the image capture unit 10 inputs the unit image data, while the positional information obtaining unit 20 inputs the image positional information of the unit image data.

The image processing unit 30 associates the unit image data obtained by the image capture unit 10 with the image positional information obtained by the positional information obtaining unit 20 to obtain package unit image data. The association in this case is a process of making the unit image data and the corresponding image positional information as one set. Consequently, in the image synthesis, the pasting position coordinates of the unit image data, the angle correction, and the like, are associated with each other. In this association, sequence information is given when each data and information is output from the image capture unit 10 and the positional information obtaining unit 20 so as to clarify the correspondence relationship, and data and information with the same sequence are associated with each other. For example, a timestamp is pressed.

The mouse scanner which is the optical terminal device in this embodiment is provided with an image synthesis unit 40 that performs a synthesis process on multiple pieces of package unit image data from the image processing unit 30, and synthesizes the entire image of the scan object range. Based on the image positional information contained in the package unit image data, the image synthesis unit 40 pastes each package unit image data, and performs correction, thereby synthesizing the image.

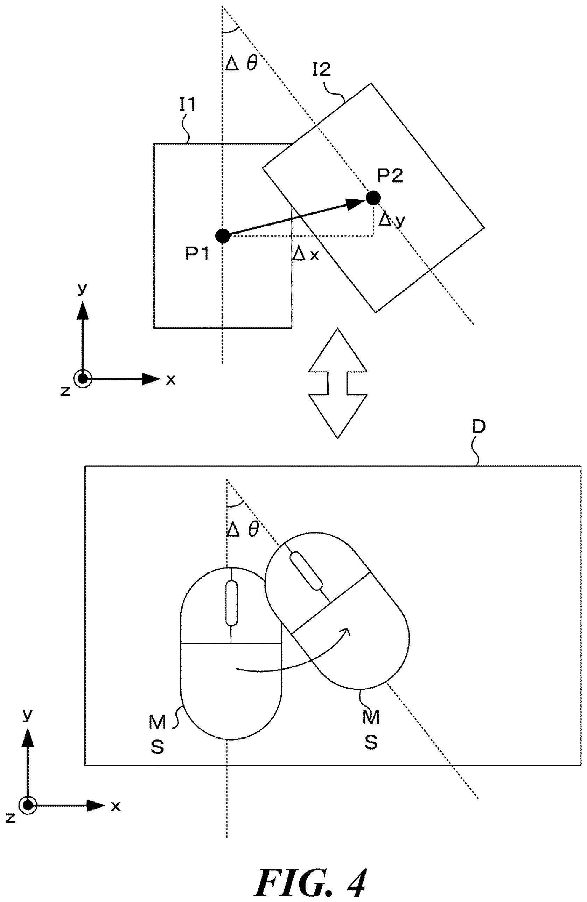

For example, as illustrated in FIG. 4, in the case of scanning a paper surface D placed horizontally, when a mouse scanner MS is moved obliquely to the horizontal direction while being rotated around a z-axis which is a vertical direction, and when the first and next package unit image data I1 and I2 are to be pasted, the arithmetic processing unit 22 calculates a pasting position P2 of the next unit image data I2 as a position displaced from the first pasting position by the amount of change (Δx, Δy, 0) in the horizontal direction, while defiding a first pasting position P1 as, for example, (0, 0, 0), and thus both unit images can be pasted. At this time, since the arithmetic processing unit 22 calculates that the mouse scanner MS is rotated by the angle θ around the z axis, an angle correction is also performed at the time of pasting.

When the pieces of pasting unit image data that are close to each other are to be pasted, one of the overlapping portions may be deleted by pattern matching using the pattern of the image or the like. Conventionally well-known schemes are applicable to synthesizing the unit image data.

The mouse scanner of this embodiment includes a control unit 50 that instructs or terminates the imaging by the image capture unit 10 based on the image positional information from the positional information obtaining unit 20. That is, the control unit 50 includes a determination unit 51 that determines whether or not the height displacement of the mouse scanner from the scan object is within a prescribed height displacement range, and an imaging control unit 52 that outputs an imaging instruction to the imaging element 11 when the determination unit 51 determines that the height displacement of the mouse scanner is within the prescribed height displacement range. An example movement within the prescribed height displacement range is a horizontal movement of the image capture unit 10. The prescribed height displacement range may be set in advance as absolute numerical values, or a plane or a curved surface where the scan object in the three-dimensional space spreads from the change in the height may be calculated, and the height displacement range may be set as variable without departing from the plane or the curved surface.

### [1-2. Action]

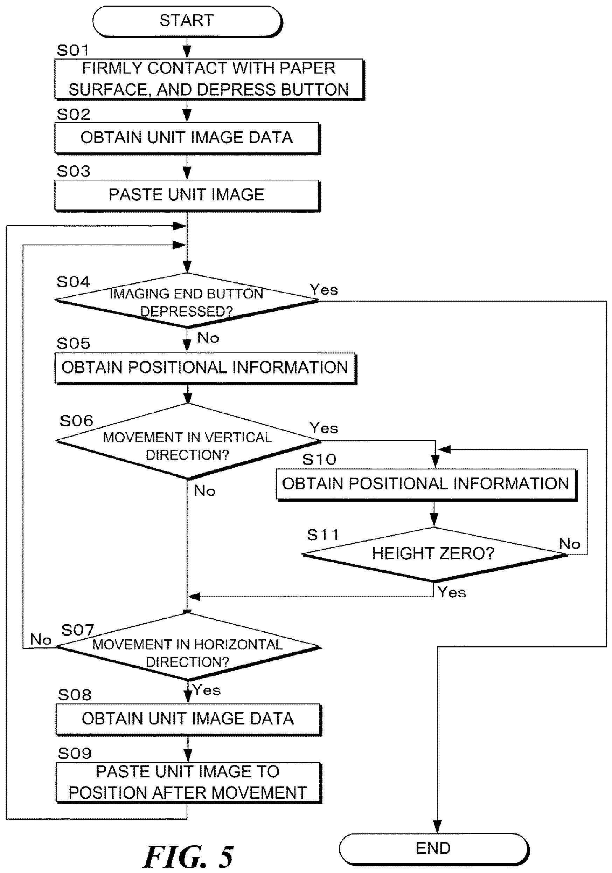

The action of the mouse scanner that is the optical terminal device of this embodiment will be described with reference to FIG. 5. In order to simplify the description, it is assumed that the scan object is a paper surface, and is arranged on a horizontal plane in a three-dimensional coordinate system. That is, it is assumed that the height is constant, and any coordinate point on the paper surface can be expressed as (x, y, 0)

Scanning starts by setting the bottom surface of the mouse scanner within a prescribed region of the scan object range on the paper surface, and depressing the imaging start button 13 in a condition the mouse scanner is firmly contacted with the paper surface (step S01). Next, the unit image data of the prescribed region is obtained by the image capture unit 10 (step S02), and this unit image data is pasted (step S03). The positional coordinates (x0, y0, 0) of this unit image data are set as the initial positions.

In this case, when the imaging end button 14 is depressed (step S04: YES), the scan is terminated. On the other hand, when the imaging end button 14 has not been depressed (step S04: NO), the positional information is obtained from the positional information obtaining unit 20 (step S05), and the determination unit 51 determines, based on the positional information, whether or not there is a movement of the height direction component, i.e., whether or not there is a movement of the component in the vertical direction to the paper surface(step S06). When determination is made that there is no movement in the vertical direction (step S06: NO), the determination unit 51 determines whether or not there is a movement in the horizontal direction (step S07). When there is no movement in the horizontal direction (step S07: NO), the process returns to the step S04. This is to confirm the user's intention for ending the scanning.

On the other hand, when there is a movement in the horizontal direction (step S07: YES), an imaging instruction is output from the imaging control unit 52, the imaging element 11 takes the image within a prescribed region, and the unit image data is obtained (step S08). In addition, the unit image is pasted on the position after the movement (step S09), and the actions in the steps S04 to S09 are repeated. When a determination is made that there is a movement in the vertical direction (step S06: YES), this means that the mouse scanner is apart from the paper surface. In this case, the determination unit 51 keeps obtaining the positional information from the positional information obtaining unit 20 (step S10), and determines whether or not the height becomes zero (step S11). That is, when a determination is made that the height becomes zero (step S11: YES), this indicates that the bottom surface of the mouse scanner is firmly contacted with the paper surface. In this case, the process progresses to the step S07, and directly or indirectly progresses to the step S04, and when the imaging end button is depressed (step S04: YES), the scanning is terminated.

### [1-3. Effects]

(1) The optical terminal device according to this embodiment is an optical terminal device that obtains the entire image of a scan object range, and includes the image capture unit 10 including the imaging element 11, and taking the image of each region within the scan object range, and obtains the unit image data of each region, the positional information obtaining unit 20 that obtains the image positional information corresponding to the unit image data, and the image synthesis unit 40 which synthesizes the multiple pieces of unit image data, and creates the entire image of the scan object range. The positional information obtaining unit 20 includes the six-dimensional sensor 21 provided in the device main body, and detecting the acceleration and the angular speed, and the arithmetic processing unit 22 that calculates the image positional information of the unit image data based on the acceleration and the angular speed.
   Accordingly, the six-dimensional sensor can detect the acceleration and the angular speed of the image capture unit 10 regardless of the position where such sensor is provided, and thus the operability is improved. That is, unlike the conventional optical terminal devices, since there is no constraint for the imaging range by providing the two positional sensors so as to be apart from each other, it becomes possible to scan even at the end portion of the scan object, and there is no need to pay attention the imaging range. Hence, the user does not need to have excessive consciousness, and the high operability is achieved.
(2) The six-dimensional sensor 21 is provided at the back side of the image capture unit 10. Hence, a restriction for the imaging range of the imaging element 11 by the sensor 21 is eliminated. Since the imaging range can be made wide, an image of the desired range can be quickly obtained.
(3) The arithmetic processing unit 22 calculates the posture information of the unit image data based on the angular speed. Accordingly, a scan image can be obtained from even a curved two-dimensional surface. That is, three-dimensional data on a three-dimensional surface can be obtained by performing a synthesis process of combining the pieces of unit image data on the curved two-dimensional surface. For example, a three-dimensional spherical surface can be scanned, and three-dimensional data applied for a three-dimensional printer can be easily obtained.
(4) Comprising control unit 50 which controls the imaging by the imaging element 11, and the arithmetic processing unit 22 calculates the height displacement as a piece of the image positional information, and the control unit 50 includes the determination unit 51 that determines whether or not the height displacement is within the prescribed height displacement range, and the imaging control unit 52 that instructs or terminates the imaging by the imaging element 11 based on the determination result by the determination unit 51. Hence, when the height displacement is out of the prescribed height displacement range, the imaging is terminated, and thus the image synthesis process is simplified. In addition, since the image apart from the scan object (e.g., the document surface) is not applied for the process, in other words, since only the highly precise unit image data is applied for the image synthesis, the entire image that is highly precise can be achieved.
(5) Comprising image processing unit 30 which associates the image positional information with the unit image data with each other to obtain the package unit image data. Hence, the deviation between the obtained image and the image positional information is prevented, enabling a precise scanning.

### [2. Second Embodiment]

### [2-1. Structure]

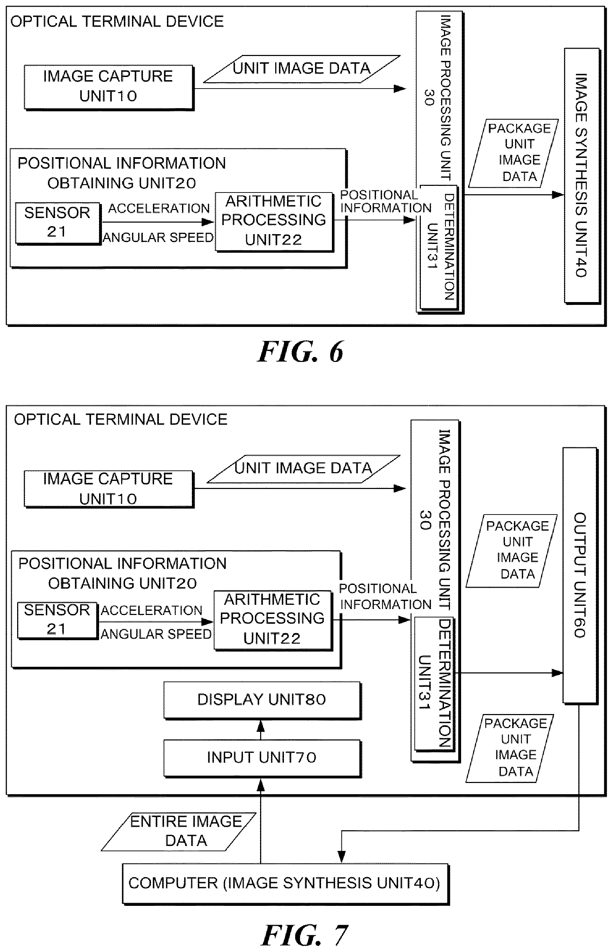

A second embodiment will be described with reference to FIG. 6. The second embodiment employs the same basic structure as that of the first embodiment. Hence, only the differences from the first embodiment will be described, the same components as those of the first embodiment will be denoted by the same reference numerals, and the detailed description thereof will not be repeated.

FIG. 6 is a functional block diagram of an optical terminal device according to the second embodiment. As illustrated in FIG. 6, according to the second embodiment, the control unit 50 is not provided but the image processing unit 30 has a determination unit 31.

That is, a control on the imaging element 11 based on the movement direction is not performed, and the imaging element 11 takes the images at a predetermined cycle. The determination unit 31 of the image processing unit 30 determines, based on the image positional information of the package unit image data calculated by the arithmetic processing unit 22, whether or not the height displacement of the image capture unit 10 when the imaging is performed to obtain such data is within the prescribed height displacement range.

When the determination unit 31 determines that the height displacement is not within such a range, the package unit image data is not output to the image synthesis unit 40. For example, this data is discarded. Consequently, only the unit image data when the height is zero and the mouse scanner is in contact with the paper surface is applied for the image synthesis, the precision of the entire image is improved.

This embodiment is not limited to a mouse scanner, and in the cases of mobile terminals, such as a mobile phone, a smartphone, and a tablet, imaging may be performed without an firm contact with the scan object. In this case, the prescribed height displacement range may be set, and the unit image data out of such a range may not be applied for the image synthesis process. The prescribed height displacement range may be set in advance as 10 cm, 3 cm, etc., as an absolute reference, or the height at the time of the start of the scanning may be stored, and based on the height transition, the range may be set.

### [2-2. Action and Effect]

In this embodiment, the arithmetic processing unit 22 calculates the height displacement as a piece of the image positional information, and the image processing unit 30 includes the determination unit 31 that determines whether or not the height displacement is within the prescribed height displacement range, and the determination unit 31 discards the package unit image data when determined as not to be within the prescribed height displacement range. Consequently, it can be determined whether or not the mouse scanner becomes apart from the scan object. That is, the unit images with a low precision can be automatically separated, and the image synthesis can be performed by the unit image data with high precision, and thus the operability is high, and the precision of the obtained entire image within the scan object range is improved.

### [3. Third Embodiment]

A third embodiment will be described with reference to FIG. 7. The third embodiment is applicable to the first embodiment or the second embodiment. In this case, the basic structure is the same as that of the second embodiment. Hence, only the differences from the second embodiment will be described, and the same components as those of the second embodiment will be denoted by the same reference numerals, and the detailed description thereof will not be repeated.

FIG. 7 is a functional block diagram including an optical terminal device according to the third embodiment. In the third embodiment, the mouse scanner is not provided with the image synthesis unit 40, but is provided with an output unit 60 connected to the image processing unit 30. The output unit 60 is connected to an external computer or server via wired or wireless communication means, such as a USB, a Bluetooth (Registered Trademark), or the Internet line. When, for example, the output unit is connected to a computer, the package unit image data created by the image processing unit 30 is output to the computer.

The image synthesis unit 40 is provided in this computer. That is, by causing the computer to execute a program stored in the HDD, the SSD, or the like, of the computer, the computer may accomplish the function as the image synthesis unit 40 to perform the synthesis process for the entire image of the scan object range. In this case, the mouse scanner may be provided with an input unit 70, the entire image created by the external computer may be input, and the entire image may be displayed on a display unit 80.

As a usage example of the display unit 80, the scan image having undergone the synthesis process may be displayed, or the unit image obtained during the scanning may be displayed. That is, by displaying in a real-time manner, when the user determines that the image of the scan object range is not obtained, the user can immediately terminates the scanning, and start over the scanning. Alternatively, the unit image or the entire image may be displayed on a display connected to the computer during the scanning. Note that the external computer includes, for example, a personal computer, a smart phone, a tablet terminal, and the like.

### [4. Fourth Embodiment]

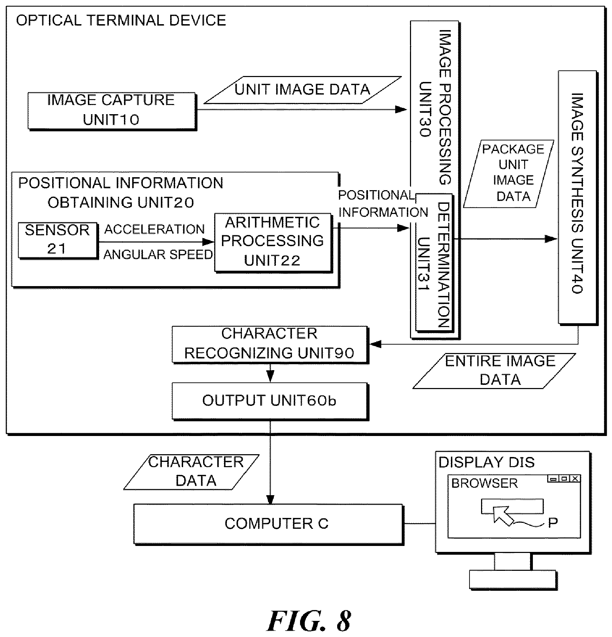

A fourth embodiment will be described with reference to FIG. 8. The fourth embodiment is applicable to the first embodiment or the second embodiment. In this case, the basic structure is the same as that of the second embodiment. Hence, only the differences from the second embodiment will be described, the same components as those of the second embodiment will be denoted by the same reference numerals, and the detailed description will not be repeated.

FIG. 8 is a functional block diagram including an optical terminal device according to the fourth embodiment. In the fourth embodiment, a character recognizing unit 90 and an output unit 60b are provided. The character recognizing unit 90 extracts a character string from the entire image transmitted from the image synthesis unit 40 to obtain character data. The output unit 60b is connected to an external computer or server by wired or wireless scheme, and outputs the character data to these devices.

The mouse scanner according to this embodiment has a pointing function, and is connected to an external computer C via the output unit 60b, thus available as a pointing device. That is, the output destination of the character data can be specified by a cursor P of the mouse via a display DIS connected to the external computer C.

For example, a URL and an unknown Chinese character described on a paper document are sometimes bothersome or difficult to input by a keyboard. Even in such a case, by providing a character recognizing software in the mouse scanner, the character string described on the paper document can be read to obtain character data, and the character data can be copied to a prescribed input destination, such as a word processing software, a table calculation software, and a search window of a browser displayed on the display DIS. The character recognizing unit 90 may function as an image recognizing unit that recognizes, nstead of the character string, a bar code, a QR code, or the like from the entire image transmitted from the image synthesis unit 40.

### [5. Fifth Embodiment]

A fifth embodiment will be described with reference to FIG. 9. The fifth embodiment is a combination of the third embodiment with the fourth embodiment. The basic structure is the same as that of the third embodiment, only the differences from the third embodiment will be described, and the same components as those of the third embodiment are denoted by the same reference numerals, and the detailed description thereof will not be repeated. In addition, the same is true of the same components as those of the fourth embodiment, and the description thereof will not be repeated as appropriate.

FIG. 9 is a functional block diagram including an optical terminal device according to the fifth embodiment. In the fifth embodiment, the image synthesis and the character recognition of the fourth embodiment are not performed by the optical terminal device, but are performed by an external computer or a server. That is, the output unit 60 in the optical terminal device outputs the package unit image data created by the image processing unit 30 to the external computer or server. In this case, the external computer is connected to the output unit 60.

This computer is provided with the image synthesis unit 40 and the character recognizing unit 90. That is, by causing the computer to execute the program stored in the HDD, the SSD, or the like, of the computer, the computer accomplishes the functions as the image synthesis unit 40 and the character recognizing unit 90 to perform the synthesis process for the entire image in the scan object range and the character recognition. The entire image and the character data obtained by the external computer are displayed on the display DIS. The character recognizing unit 90 may extract the character string from the entire image to obtain the character data, or may extract the character strings from the package unit image data to obtain the character data. Like the fourth embodiment, the character data may be input to the prescribed input destination by the pointer function of the mouse scanner according to this embodiment. In addition, by the pointer function, data of the entire image may be input to the prescribed input destination, for example, the search window of an image search software. Hence, the image search can be performed by the image search software installed in the computer.

As described above, by outputting the package unit image data to the external device, even if the processing performance of the CPU or the like of the optical terminal device is not high, the synthesis of the entire image and the character recognition can be performed by the external computer or the like having a relatively high processing performance. Hence, even if the data amount of the package unit image data is large, it becomes possible to deal with such a large data amount.

### [6. Other Embodiments]

The present disclosure is not limited to the first to fifth embodiments, and covers the following other embodiments. In addition, the present disclosure covers a combination of at least two embodiments among the first to fifth embodiments.

According to the first to fifth embodiments, as for the determination on the height, whether or not the scan object is apart is determined based on the coordinate in the z-axis direction, but when the scan object is not a plane but is curved, whether or not the scan object is apart may be determined based on not only the coordinate in the z-axis direction but also a rotational coordinate around the other axis.

According to the first to fifth embodiments, only the six-dimensional sensor is applied as the sensor for the positional information obtainment, but an optical sensor may be applied in addition to the six-dimensional sensor.

### REFERENCE SIGNS LIST

- 10: Image capture unit

- 11: Imaging element
- 12: Transparent plate
- 13: Imaging start button
- 14: Imaging end button
- 20: Positional information obtaining unit
- 21: Sensor (six-dimensional sensor)
- 21a: Three-dimensional acceleration sensor
- 21b-21d: Gyro sensor
- 22: Arithmetic processing unit
- 30: Image processing unit
- 31: Determination unit
- 40: Image synthesis unit
- 50: Control unit
- 51: Determination unit
- 52: Imaging control unit
- 60,: 60b Output unit
- 70: Input unit
- 80: Display unit
- 90: Character recognizing unit
- C: Computer
- D: Paper surface
- DIS: Display
- MS: Mouse scanner
- I1: First package unit image data
- I2: Second package unit image data
- P: Mouse cursor
- P1: First package unit image data pasting position
- P2: Second package unit image data pasting position
- Δθ: Rotation angle around z-axis

## Claims

1. An optical terminal device obtaining an entire image of a scan object range, the optical terminal device comprising:
an image capture unit comprising an imaging element, taking an image of each region within the scan object range, and obtaining unit image data of the each region;
a positional information obtaining unit obtaining image positional information corresponding to the unit image data; and
an image synthesis unit synthesizing a plurality of the unit image data, and creating the entire image of the scan object range,
wherein the positional information obtaining unit comprises:
a six-dimensional sensor provided at a device main body, and detecting an acceleration and an angular speed; and
an arithmetic processing unit calculating the image positional information of the unit image data based on the acceleration and the angular speed.

2. The optical terminal device according to claim 1, wherein the six-dimensional sensor is provided at a back side of the image capture unit.

3. The optical terminal device according to claim 1 or 2, wherein the arithmetic processing unit calculates posture information of the unit image data based on the angular speed.

4. The optical terminal device according to any one of claims 1 to 3, further comprising a control unit controlling an imaging by the imaging element, wherein:
the arithmetic processing unit calculates a height displacement as a piece of the image positional information;
the controller comprises:
a determination unit determining whether or not the height displacement is within a prescribed height displacement range; and
an imaging control unit instructing or terminating the imaging by the imaging element based on a determination result by the determination unit.

5. The optical terminal device according to any one of claims 1 to 3, wherein:
the arithmetic processing unit calculates a height displacement as a piece of the image positional information;
the image processing unit comprises a determination unit determining whether or not the height displacement is within a prescribed height displacement range; and
the determination unit discards the unit image data determined as out of the prescribed height displacement range.

6. The optical terminal device according to any one of claims 1 to 5, further comprising an image processing unit associating the image positional information with the unit image data to obtain package unit image data.

7. The optical terminal device according to any one of claims 1 to 6, further comprising a display unit displaying an image, wherein the display unit displays a unit image or the entire image during scanning.

8. An optical terminal device obtaining an entire image of a scan object range, the optical terminal device comprising:
an image capture unit comprising an imaging element, taking an image of each region within the scan object range, and obtaining unit image data of the each region;
a positional information obtaining unit obtaining image positional information corresponding to the unit image data;
an output unit outputting the unit image data and the image positional information; and
a pointing unit,
wherein:
the positional information obtaining unit comprises:
a six-dimensional sensor provided at a device main body, and detecting an acceleration and an angular speed; and
an arithmetic processing unit calculating the image positional information of the unit image data based on the acceleration and the angular speed; and
the output unit is connected to an external computer or server, and outputs to a prescribed location specified by the pointing device.

9. A scan program executed on an optical terminal device comprising an image capture unit comprising an imaging element, taking an image of each region within a scan object range, and obtaining unit image data of the each region, a six-dimensional sensor provided at a device main body, and detecting an acceleration and an angular speed, and a computer, the scan program causing the computer to function as:
arithmetic processing unit calculating image positional information corresponding to the unit image data based on the acceleration and the angular speed; and
image synthesis unit synthesizing a plurality of the unit image data, and creating an entire image of the scan object range.

10. The scan program according to claim 9, further causing the computer to function as
the arithmetic processing unit calculating a height displacement as a piece of the image positional information;
determination unit determining whether or not the height displacement is within a prescribed height displacement range; and
imaging control unit instructing or terminating an imaging by the imaging element based on a determination result by the determination unit.

11. The scan program according to claim 9, further causing the computer to function as:
the arithmetic processing unit calculating a height displacement as a piece of the image positional information;
the determination unit determining whether or not the height displacement is within a prescribed height displacement range; and
discarding unit discarding the unit image data determined as out of the prescribed height displacement range.
